# EUROPEAN PATENT APPLICATION

(11) **EP 1 599 003 A1**
(43) Date of publication of application: **23.11.2005**
(21) Application number: 04712757.6
(22) Date of filing: 19.02.2004
(51) Int. Cl.: H04L 29/02

(54) **TRANSMISSION/RECEPTION SYSTEM, TRANSMITTING DEVICE AND METHOD, AND RECEIVING DEVICE AND METHOD**

(30) Priority: 28.02.2003 JP 2003053796
(71) Applicant: SONY CORPORATION, Tokyo 141-0001 (JP)
(72) Inventor: YANAMOTO, K. Sony Corporation, Tokyo 1410001 (JP); MASATO, Tsuyoshi Sony Corporation, Tokyo 1410001 (JP); OGIHARA, Masaru C/o Sony Corporation, Tokyo 1410001 (JP); TAKAHASHI, Katsuya C/o Sony Corporation, Tokyo 1410001 (JP)
(74) Representative: DeVile, Jonathan Mark
(86) International application number: PCT/JP2004/001947
(87) International publication number: WO 2004/077780

(57) **Abstract**

The present invention relates to a transmitter and a receiver designed to improve the reliability of communications therebetween. During communication processes under UDP adopted as the transport layer, data having RTP headers is transmitted and received between the transmitter and the receiver. The receiver references the sequence numbers in the received RTP headers to verify the continuity of the numbers. If any data with a serially continuous sequence number is not received, the receiver finds that data to be missing and requests the transmitter to retransmit the data associated with the missing sequence number. The receiver then acquires the missing data that has been retransmitted. This invention applies to transmitters that transmit data and to receivers that receive the transmitted data.

## Description

### Technical Field

The present invention relates to a transmitting and receiving system, a transmitting apparatus, a transmitting method, a receiving apparatus, and a receiving method. More particularly, the invention relates to a transmitting and receiving system, a transmitting apparatus, a transmitting method, a receiving apparatus, and a receiving method for compensating for packets that have been lost while being transmitted or received.

### Background Art

Electronic networks have gained widespread acceptance today, and more and more services are being offered on these networks. Some networks are structured in wired fashion; others are constituted wirelessly.

With the networks coming into general use, there has been a need for improving the reliability of communication over any of the networks being used. For example, if some fault occurs on a network path over which target data is being transmitted, other paths are arranged to form so that the same data may be transmitted over the alternative paths to its destination. A method for implementing such transmission to prevent data dropouts is disclosed illustratively in Japanese Patent Laid-open No. Hei 11-98161.

In recent years, wireless LANs (Local Area Networks) have become popular as household networks because this type of network is easier to install than its wired counterpart. However, because of its particular characteristics, the wireless LAN tends to be less reliable than the wired LAN.

For example, a wireless LAN setup obviously involves transmitting and receiving data wirelessly. The status of communication in that setup can easily deteriorate if a person crosses a data path between a transmitter and a receiver in communication or if humidity or other ambient factors in the household change significantly. The worsening state of communication can result in data dropouts or other irregularities during transmission or reception (i.e., communication).

To counter that deficiency, retransmission control is typically instituted in wireless data transmission and reception setups. Specifically, the receiver side having received data from the sender side returns an ACK (acknowledgement) signal to the sender side. Until the ACK signal is received, the sender side keeps transmitting the same data a predetermined number of times (i.e., retransmits) to the receiver side.

Such retransmission control requires the sender side to check the status of the receiver side while transmitting data to it again and again. Because the sender side retransmits the same data continuously, i.e., because the sender side keeps transmitting the same data and no other data repeatedly, delays are liable to be accumulated. That often means the data to be sent cannot be transmitted exactly when it is needed.

It might also happen that the receiver side normally receiving data from the sender side returns the ACK signal but the signal fails to reach the sender side. In that case, the sender side proceeds with data retransmission anyway. Such retransmissions, unnecessary and wasteful, can also lead to delays and worsening of the reliability of communication.

The receiver side, for its part, is faced with the prospect of repeatedly receiving the same data that has already been received normally and is obliged to take measures to deal with the retransmitted data. This is another process that is wastefully repeated.

The above type of retransmission control (i.e., verification of whether or not transmitted data has been normally received by the receiver side) is performed illustratively when TCP (Transmission Control Protocol) belonging to the transport layer of the OSI layer model is used but not when UDP (User Datagram Protocol) also belonging to the same transport layer of the OSI layer model is utilized.

It follows that when data is transmitted and received under UDP, the receiver side may fail to receive certain data but the lost data cannot be acquired from the sender side.

### Disclosure of Invention

The present invention has been made in view of the above circumstances and provides arrangements such that if data transmitted by a sender side is not received by a receiver side for some reason, the data is acquired from the sender side by the receiver side requesting the sender side to retransmit the missing data.

According to the present invention, there is provided a transmitting and receiving system including a transmitting apparatus for transmitting data and a receiving apparatus for receiving the data transmitted by the transmitting apparatus; wherein the transmitting apparatus includes: acquiring means for acquiring the data; supplementing means for supplementing the data acquired by the acquiring means with sequence information indicating the sequence of the data; storing means for storing the data supplemented with the sequence information by the supplementing means; transmitting means for transmitting to the receiving apparatus the data supplemented with the sequence information by the supplementing means; and retransmitting means which, if the data transmitted by the transmitting means is requested to be retransmitted by the receiving apparatus, then retrieves the requested data from the storing means, before instructing the transmitting means to retransmit the retrieved data; and wherein the receiving apparatus includes: receiving means for receiving the data transmitted by the transmitting means; deciding means for deciding whether or not any data is missing on the basis of the sequence information extracted from the data received by the receiving means; identifying means for identifying data as missing data if that data is deemed to be missing by the deciding means; and requesting means for requesting the transmitting apparatus to retransmit the data identified by the identifying means as the missing data.

According to the present invention, there is provided a transmitting apparatus including: acquiring means for acquiring data; supplementing means for supplementing the data acquired by the acquiring means with sequence information indicating the sequence of the data; storing means for storing the data supplemented with the sequence information by the supplementing means; transmitting means for transmitting the data supplemented with the sequence information by the supplementing means; and retransmitting means which, if the data transmitted by the transmitting means is requested to be retransmitted by another apparatus, then retrieves the requested data from the storing means, before instructing the transmitting means to retransmit the retrieved data.

Preferably, the request by the other apparatus to retransmit the data may include sequence information indicating the sequence of the data requested to be retransmitted; and the retransmitting means may retrieve from the storing means the data supplemented with the sequence information coinciding with the sequence information indicating the sequence of the data.

Preferably, the supplementing means may supplement the data with at least a header based on RTP as the sequence information; and the storing means may store the data supplemented with the RTP header.

Preferably, the request by the other apparatus to retransmit the data may include sequence number information as part of the RTP header; and the retransmitting means may retrieve from the storing means the data supplemented with the header including the sequence number coinciding with the sequence number information included in the RTP header.

According to the present invention, there is provided a transmitting method including the steps of: controlling acquisition of data; supplementing the data acquired in the acquisition controlling step with sequence information indicating the sequence of the data; controlling storage of the data supplemented with the sequence information in the supplementing step; controlling transmission of the data supplemented with the sequence information in the supplementing step; and instructing the transmission controlling step to retransmit the retrieved data if the data transmitted in the transmission controlling step is requested to be retransmitted by another apparatus, then retrieving the requested data from the storage controlled in the storage controlling step.

According to the present invention, there is provided a receiving apparatus including: receiving means for receiving data; deciding means for deciding whether or not any data is missing on the basis of predetermined information extracted from the data received by the receiving means; identifying means for identifying data as missing data if that data is deemed to be missing by the deciding means; and requesting means for requesting another apparatus having transmitted the data to retransmit the data identified by the identifying means as the missing data.

Preferably, the receiving apparatus may further include: counting means for counting time starting from when the requesting means makes the request; and instructing means for instructing the requesting means to make another request every time a predetermined time period has been counted by the counting means.

The predetermined information above may preferably constitute sequence information indicating the sequence of the data.

Preferably, if the deciding means stores first sequence information that is the latest of the sequence information included in the received data, if the first sequence information is not deemed continued to second sequence information included in newly received data, and if the first sequence information is found later in sequence than the second sequence information, then the deciding means may determine that the data has been missing; the identifying means may identify as missing data the data including third sequence information coming interposingly between the first sequence information and the second sequence information; and the requesting means may request the other apparatus to retransmit the data including the third sequence information as the data deemed to have been missing.

Preferably, the predetermined information above may constitute serial numbers arranged in ascending order and assigned to data; if the deciding means stores a first number that is the largest of the serial numbers included in the received data, if the first number is not deemed continued to a second number included in newly received data, and if the first number is found smaller than the second number, then the deciding means may determine that the data has been missing; the identifying means may identify as missing data the data including a third number coming interposingly between the first number and the second number; and the requesting means may request the other apparatus to retransmit the data including the third number as the data deemed to have been missing by transmitting data including information about the third number to the other apparatus.

Preferably, the deciding means may extract as the above predetermined information a header based on RTP from the data in order to determine whether or not the data is missing on the basis of information about sequence numbers included in the header.

Preferably, if the deciding means stores a first sequence number that is the largest of the sequence numbers included in the header, if the first sequence number is not deemed continued to a second sequence number included in a newly supplied header, and if the first sequence number is found smaller than the second sequence number, then the deciding means may determine that the data has been missing; the identifying means may identify as missing data the data having a header including a third number coming interposingly between the first sequence number and the second sequence number; and the requesting means may request the other apparatus to retransmit the data deemed to have been missing by transmitting data including information about the third sequence number to the other apparatus.

Preferably, the requesting means may transmit the data including the information about the third sequence number under TCP.

Preferably, if the first sequence number is not deemed continued to the second sequence number and if the first sequence number is found larger than the second sequence number, then the deciding means may determine that the data including the second sequence number is the retransmitted data.

According to the present invention, there is provided a receiving method including the steps of: controlling reception of data; deciding whether or not any data is missing on the basis of predetermined information extracted from the data received in the reception controlling step; identifying data as missing data if that data is deemed to be missing in the deciding step; and requesting another apparatus having transmitted the data to retransmit the data identified in the identifying step decided as the missing data.

According to the present invention, as outlined above, if the receiving apparatus fails to receive data transmitted from the transmitting apparatus during a transmission-reception process, the receiving apparatus requests the transmitting apparatus to retransmit the missing data.

According to this invention, the sender side stores the data that has been transmitted so that if a request is made by the receiver side to retransmit any data that has already been transmitted, the sender side retrieves the requested data from the storage and retransmits the retrieve data.

Also according to the invention, if the receiver side deems any data to have been missing, the receiver side sends information for identifying the missing data to the sender side.

### BRIEF DESCRIPTION OF DRAWINGS

FIG. 1 is a schematic view showing a typical structure of a transmitting and receiving system practiced as an embodiment of the present invention;
FIG. 2 is a block diagram showing a typical internal structure of a transmitting apparatus;
FIG. 3 is an explanatory view of data transmitted by the transmitting apparatus;
FIG. 4 is an explanatory view of a header of a TS packet;
FIG. 5 is an explanatory view of an RTP header;
FIG. 6 is an explanatory view of a UDP header;
FIG. 7 is an explanatory view of an IP header;
FIG. 8 is an explanatory view of a MAC header;
FIG. 9 is a block diagram showing a typical internal structure of a receiving apparatus;
FIG. 10 is an explanatory view of data stored in a storage unit;
FIG. 11 is a flowchart of steps constituting a typical process performed by the receiving apparatus to request data retransmission;
FIG. 12 is a flowchart of steps constituting the process of step S17 in the flowchart of FIG. 11;
FIGS. 13A, 13B are an explanatory views showing how sequence numbers may be related to one another when received;
FIG. 14 is a flowchart of steps constituting a typical process carried out by the transmitting apparatus to deal with retransmission requests; and
FIG. 15 is an explanatory view showing storage media that may be used.

### Best Mode for Carrying out the Invention

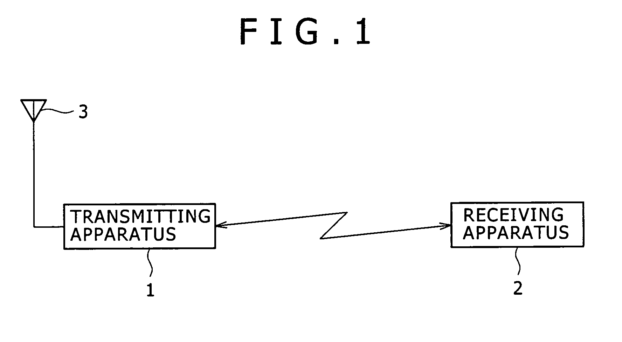

Preferred embodiments of the present invention will now be described with reference to the accompanying drawings. FIG. 1 is a schematic view showing a typical structure of a transmitting and receiving system practiced as an embodiment of the invention. The transmitting and receiving system of FIG. 1 is made up of a transmitting apparatus 1 and a receiving apparatus 2. The transmitting apparatus 1 receives TV broadcast data via an antenna 3 and transmits the received data to the receiving apparatus 2. The receiving apparatus 2 has a display device (e.g., a display) and an audio output device (e.g., speakers) whereby images and sounds derived from the received data are output.

It is assumed hereunder that analog-signal TV broadcasts are received and the data representative of the received broadcasts is transmitted to the receiving apparatus 2. However, this is not limitative of the invention. The present invention applies not only to analog-signal TV broadcasts but also to digital-signal TV broadcasts such as BS (broadcasting satellite) digital broadcasts, CS (communications satellite) digital broadcasts, and terrestrial digital broadcasts.

It is also possible to attach devices such as a VTR (Video Tape Recorder) and a DVD (Digital Versatile Disc) player to the transmitting apparatus 1 so that data coming from the attached devices may be transmitted and received. Furthermore, the transmitting apparatus 1 may be connected to a network such as the Internet and the information acquired over the connected network may also be transmitted and received.

The transmitting apparatus 1 and receiving apparatus 2 transmit and receive data wirelessly. The wireless communication is carried out based on IEEE 802.11a standard. For example, a user may set up the transmitting apparatus 1 fixedly somewhere in his or her household while bringing the receiving apparatus 2 to a desired place in the house to watch TV broadcasts.

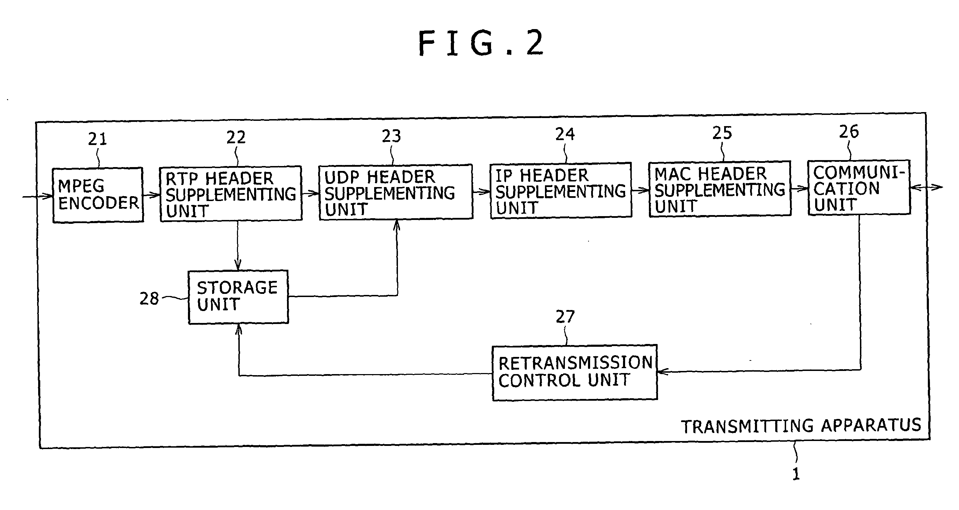

FIG. 2 shows a typical internal structure of the transmitting apparatus 1. The internal structure illustrated in FIG. 2 indicates relevant components that need to be explained in connection with this invention. The components irrelevant to the invention are not shown, such as a tuner for extracting user-designated programs from received TV broadcasts or a switcher for switching inputs from the VTR, DVD player and the like attached to the transmitting apparatus 1.

The transmitting apparatus 1 inputs data (signal) representative of the TV broadcasts received via the antenna 3. The input signal is illustratively an analog signal that is introduced to an MPEG (Moving Picture Experts Group) encoder 21. In turn, the MPEG encoder 21 converts the input analog signal into digital data in MPEG-compressed format.

Where digital-signal TV broadcast data is input, there is no need to encode the data using the MPEG encoder 21. That means the apparatus need not be structured to let all input data pass through the MPEG encoder 21; there may be provided different ports through which to input different types of data. In that case, the transmitting apparatus 1 may be equipped with a switcher, not shown, for selecting the output destination to which to forward the input data.

The output from the MPEG encoder 21 is in transport stream packet (TS packet) form and is supplied to an RTP (Real Time Protocol) header supplementing unit 22. The RTP header supplementing unit 22 puts a predetermined number (e.g., seven) of the supplied TS packets together and supplements the grouped packets with an RTP header. The packet group together with its header is transmitted to a UDP (User Datagram Protocol) supplementing unit 23 and to a storage unit 28. The TS packet group supplemented with the RTP header by the RTP header supplementing unit 22 may be called an RTP packet.

The UDP header supplementing unit 23 further supplements the supplied RTP packet with a UDP header, before transmitting the packet along with the header to an IP (Internet Protocol) header supplementing unit 24. The RTP packet supplemented with the UDP header by the UDP header supplementing unit 23 may be called a UDP packet.

The IP header supplementing unit 24 supplements the supplied UDP packet with an IP header and forwards the packet together with the header to a MAC (Media Access Control) header supplementing unit 25. The UDP packet supplemented with the IP header by the IP header supplementing unit 24 may be called an IP packet.

The MAC header supplementing unit 25 supplements the supplied IP packet with a MAC header and sends the packet along with the header to a communication unit 26. The IP packet supplemented with the MAC header by the MAC header supplementing unit 25 may be called a MAC packet.

The TS packets supplemented with different headers at different stages and turned into the MAC packet as described are transmitted from the communication unit 26 to the receiving apparatus 2. The communication unit 26 not only transmits MAC packets (data) to the receiving apparatus 2 but also receives data from the receiving apparatus 2. The data coming from the receiving apparatus 2 typically constitutes a retransmission request that is output by the apparatus 2 upon failure to receive data from the transmitting apparatus 1, as will be discussed later. If the retransmission request data is received, the data is forwarded to a retransmission control unit 27.

Based on the supplied data, the retransmission control unit 27 identifies the data requested to be retransmitted and causes the identified data to be supplied from the storage unit 28 to the UDP header supplementing unit 23. The storage unit 28 stores data that may be retransmitted upon request. The stored data is made up of RTP packets supplemented with RTP headers by the RTP header supplementing unit 22.

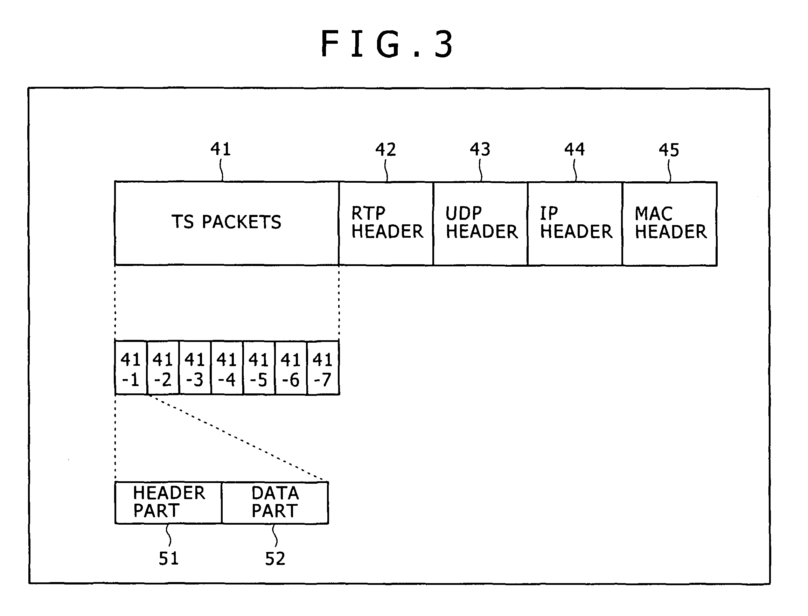

FIG. 3 is an explanatory view of typical data (MAC packet) that is supplied to the communication unit 26 after undergoing the processing by a series of components ranging from the MPEG encoder 21 to the MAC header supplementing unit 25. As shown in FIG. 3, the data supplied to the communication unit 26 includes TS packets 41 encoded by the MPEG encoder 21. As mentioned above, seven TS packets 41-1 through 41-7 constitute one MAC packet supplied to the communication unit 26. Each TS packet is made up of 188 bytes.

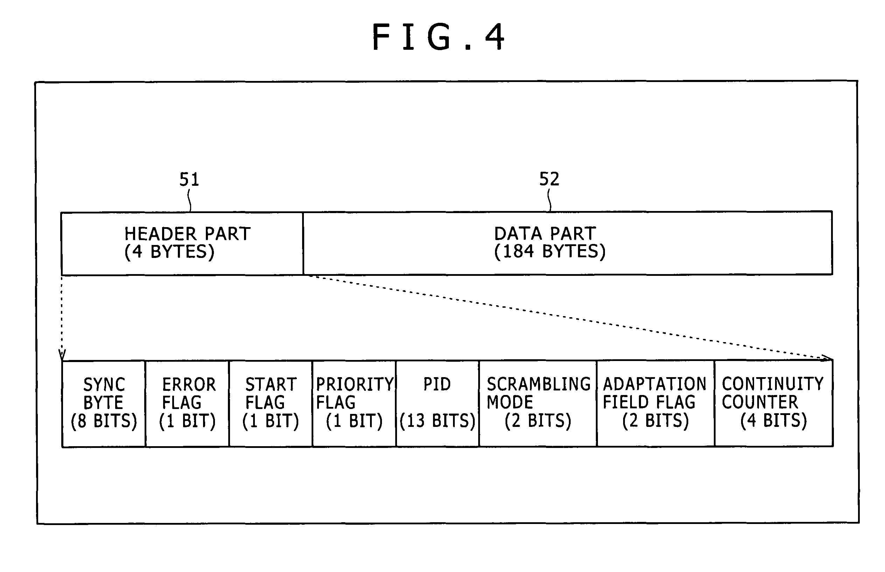

A single TS packet 41 (e.g., TS packet 41-1) is formed by a header part 51 and a data part 52. The header part 51 includes data such as that shown in FIG. 4. The data part 51 includes video data or audio data to be offered by the receiving apparatus 2 (FIG. 1) to the user as images or sounds.

FIG. 4 shows a typical data structure of the header 51 in a TS packet 41. The header part 51 is constituted by 4 bytes and the data part 52 by 184 bytes. A "sync byte" field in the header 51 serves to provide synchronization and its value is fixed illustratively at 47h. An "error flag" is a flag that indicates whether or not there exists any uncorrectable bit error in the TS packet 41.

A "start flag" indicates that this packet is a new PES packet or a new TS-PSI selection. A "priority flag" indicates the priority of this packet. If the priority flag bit is set for 1, that means the priority of this packet is higher than other TS packets 41. A "PID" field constitutes a 13-bit numeric value (identifier) indicating whether or not a payload part (i.e., data part 52) of the TS packet 41 has video data, audio data, or TS-PSI (TS-program specific information).

A "scrambling mode" field has information denoting the scrambling mode of the data part 52. An "adaptation field flag" is a flag that provides information indicating the presence or absence of an adaptation field containing PCR (program clock reference) or like information. A "continuity counter" field has a counter value incremented by 1 for a packet having the same PID.

The MPEG encoder 21 (FIG. 2) converts the input analog signal into digital data. The digital data is then subjected to MPEG compression so as to generate the data part 52 and header part 51 shown in FIG. 4, whereby a single TS packet 41 is generated.

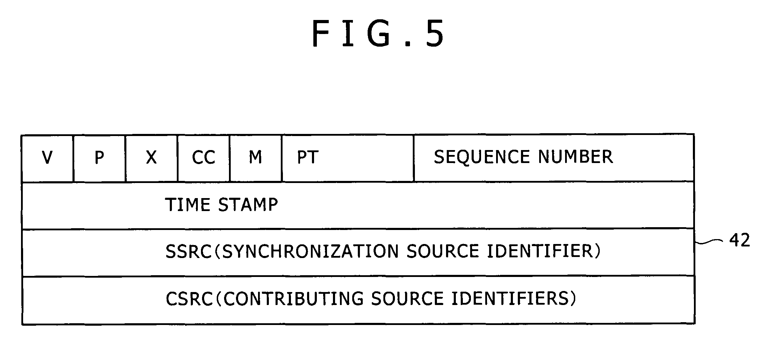

FIG. 3 shows seven such TS packets 41. An RTP header 42 (FIG. 3) supplemented by the RTP header supplementing unit 22 (FIG. 2) has a data structure such as that shown in FIG. 5.

Reference character "V" in the RTP header 42 represents a version bit, i.e., information indicating the version number of the format in which the RTP header 42 is furnished. Reference character "P" denotes a padding bit used to adjust the size of this packet. Reference character "X" stands for an extension bit designated at function extension time.

Reference characters "CC" represent a CSRC count, i.e., information indicating the number of transmission sources involved in a real-time transmission process. Reference character "M" denotes a marker bit delimiting a frame boundary of each packet. Reference characters "PT" stand for a payload type constituting information about the type of the payload in effect. A "sequence number" field has information indicating the number of the RTP packet in terms of sequence.

A "time stamp" field gives information about the time stamp at which the RTP header 42 was generated. An "SSRC" field constitutes a synchronization source identifier indicating a synchronization source, i.e., the source of the first transmission. A "CSRC" field has contributing source identifiers that identify the destinations (clients) to which to transmit the group of packets included in a message.

TS packets 41 are inserted into the payload corresponding to the RTP header 42 having the above-mentioned items of information. The RTP packet furnished with the RTP header 42 above is further supplemented with a UDP header 43 (FIG. 3) by the UDP header supplementing unit 23 (FIG. 2).

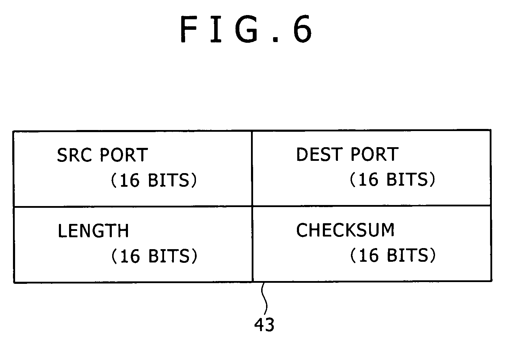

FIG. 6 shows a typical data structure of the UDP header 43. An "SRC port" field in the UDP header 43 has information designating the port number of the transmission source. A "DEST port" has information designating the port number of the destination to which to send data. The two fields provide information for designating the services to be used.

A "length" field has information indicating the combined length of the UDP header 43 and of the data subsequent to it (in bytes). A "checksum" field has information constituting a value calculated on the basis of the UDP header information and the data length. The receiver side performs the same calculations as the sender side to calculate the checksum. A decision is then made whether or not the calculated value matches the checksum included in the received UDP header 43. A checksum mismatch indicates the possibility of the packet having been destroyed in transmit.

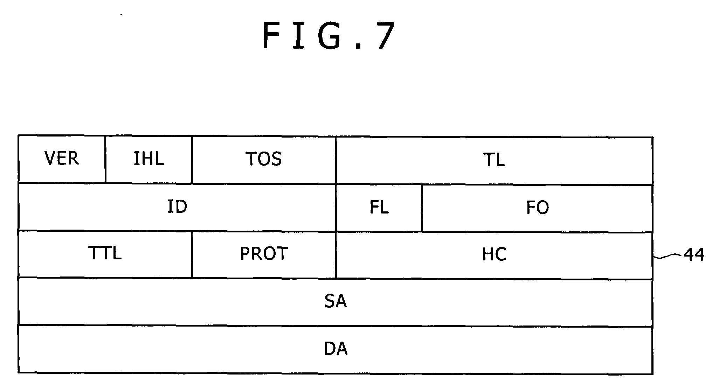

The UDP packet furnished with the UDP header 43 above is further supplemented with the IP header 44 (FIG. 3) by the IP header supplementing unit 24 (FIG. 2). FIG. 7 shows a typical data structure of the IP header 44. The data structure of the IP header 44 in FIG. 7 indicates only basic header fields; no optional header fields are shown.

A "ver" field has information indicating the version of the Internet Protocol (IP) in use. An "IHL" field has information indicating an Internet header length, i.e., the length of this header. A "TOS" field gives information about the type of service, defining the priority of data and designating the type of transfers to be made.

A "TL" field gives information indicating the combined length of the IP header 44 and of the data subsequent to it. An "ID" field has information identifying the IP packet indicated by the IP header 44. An "FL" field has information about control on the fragmentation of data in the IP layer.

An "FO" field gives information indicating where data is located upon its fragmentation in the IP layer. A "TTL" field gives information indicating the time to live, i.e., a time period that ends upon discarding of the data including this IP header 44. A "PROT" field has information indicating the protocol for use in layers above the IP layer.

An "HC" field gives information constituting a checksum allowing the receiver side to decide whether or not the IP header 44 has been destroyed during transmission. An "SA" field gives information indicating the IP address of the source from which data was transmitted. A "DA" field gives information indicating the IP address of the destination to which to transmit data.

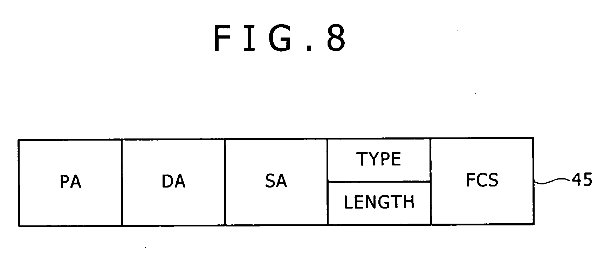

The IP packet furnished with the IP header 44 above is furnished supplemented with an MAC header 45 (FIG. 3) by the MAC header supplementing unit 25 (FIG. 2). FIG. 8 shows a typical data structure of the MAC header 45.

A "PA" field provides preamble information used to lock PLL for clock recovery. A "DA" field has information indicating the MAC address of a transmission destination. An "SA" field gives information indicating the MAC address of a transmission source. A "type" field gives information indicating the protocol of an upper layer.

A "length" field has information indicating the number of bytes that make up the payload. One MAC header 45 carries either the "type" or the "length" information. An "FCS" field provides information for error checks. The data shown in FIG. 3 (i.e., MAC packet) is created by furnishing the MAC header 45 including the information described above.

For convenience of explanation, it is assumed here that the data having the structure shown in FIG. 3 is transmitted from the transmitting apparatus 1 to the receiving apparatus 2. Although data with its structure excluding the RTP header 42 can also be transmitted to the receiving apparatus 2, this embodiment of the invention assumes that data furnished with the RTP header 42 is transmitted in the format illustrated in FIG. 3.

The fact that data is transmitted together with the RTP header 42 is a precondition for the embodiment of this invention to implement one of its features. That is, as will be discussed later in more detail, if the data coming from the transmitting apparatus 1 is not received by the receiving apparatus 2 for some reason, then information in the RTP header 42 ("sequence number" in FIG. 5, to be more specific) is used for acquiring the missing data.

The UDP header 43 could be replaced by a TCP (Transmission Control Protocol) header. However, the embodiment of this invention opts to utilize the UDP header 43 shown in FIG. 3.

The outgoing data is supplemented not with the TCP header but with the UDP header for the following reason: The TCP header is furnished when TCP is utilized as the transport layer protocol, whereas the UDP header is provided when UDP is employed as the transport layer protocol.

Whether TCP or UDP is to be used as the transport layer protocol depends in part on what kind of data is transmitted and received during communication processes pursuant to the protocol. TCP may be called a connection type protocol and UDP a connectionless type protocol.

Being a connection type protocol, TCP requires complicated procedures in processing data exchanges but ensures higher degrees of reliability during communication processes. As such, TCP is employed primarily for communications that give priority to dependability. As opposed to TCP, UDP as a connectionless type protocol entails much simplified procedures in processing data exchanges while reducing the time required for communication. That is, UDP is utilized principally for communications that give priority to processing speed.

With this embodiment of the invention, TV broadcast data received by the transmitting apparatus 1 is transmitted to the receiving apparatus 2. For that reason, UDP is adopted as the protocol giving priority to processing speed rather than to the reliability in real-time data exchanges.

During communication processes under UDP, however, the transmitting apparatus 1 keeps transmitting data successively regardless of the data being actually received by the receiving apparatus 2. The receiving apparatus 2 could fail to receive some of the data that is being transmitted continuously. If the receiving apparatus 2 proceeds with its processing without acquiring the missing data, the images or sounds offered to the user could be interrupted or otherwise disturbed. These irregularities should be avoided if at all possible.

With this embodiment of the invention, the receiver side is arranged to acquire data that has been lost somehow in transmit during communication under UDP. What follows is a description of the receiving apparatus 2 having the capability to acquire the missing data.

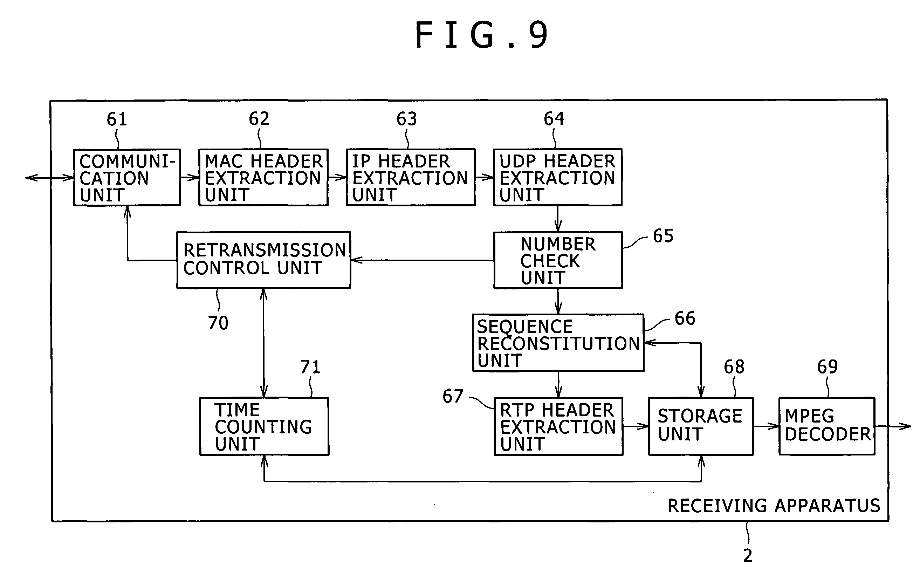

FIG. 9 shows a typical internal structure of the receiving apparatus 2. A communication unit 61 of the receiving apparatus 2 receives data from the transmitting apparatus 1 and sends back relevant data to the apparatus 1. The data received by the communication unit 61 from the transmitting apparatus 1, structured as shown in FIG. 3, is fed to a MAC header extraction unit 62. The MAC header extraction unit 62 extracts a MAC header 45 (FIG. 3) from the supplied data (i.e., MAC packet) and forwards the IP packet devoid of the MAC header to an IP header extraction unit 63.

The IP header extraction unit 63 extracts an IP header 44 from the supplied IP packet and sends the resulting UDP packet to a UDP header extraction unit 64. The UDP header extraction unit 63 extracts a UDP header 43 from the supplied UDP packet and supplies the resulting RTP packet to a number check unit 65.

The number check unit 65 references the "sequence number" field (FIG. 5) in the RTP header 42 and checks the sequence number contained therein. The sequence numbers are generally serial numbers assigned in ascending order to packets (i.e., RTP headers 42), i.e., in the order in which the packets were processed by the transmitting apparatus 1. Alternatively, the sequence numbers may be assigned in descending order to the packets.

The number check unit 65 checks the sequence number of each RTP packet supplied. If the checked sequence number is found serially continuous, then the number check unit 65 sends the packet in question to a sequence reconstitution unit 66. If the checked sequence number is not found serially continuous, then the number check unit 65 forwards the supplied RTP packet to the sequence reconstitution unit 66 while instructing a retransmission control unit 70 to request transmission of the missing data. Given the instruction to request retransmission of packets including the RTP packet of interest, the retransmission control unit 70 causes the communication unit 61 to transmit to the transmitting apparatus 1 data constituting a retransmission request.

In the meantime, the sequence reconstitution unit 66 references the sequence number of each RTP packet supplied, and checks to decide whether or not the data having the same number as the sequence number (i.e., corresponding data) is stored in a storage unit 68. If the corresponding data is found to be stored, the sequence reconstitution unit 66 discards the supplied RTP packet; if no corresponding data is found, then the sequence reconstitution unit 66 forwards the supplied RTP packet to an RTP header extraction unit 67.

The RTP header extraction unit 67 extracts the RTP header 42 from the supplied RTP packet and stores the resulting TS packet 41 into the storage unit 68. The TS packets 41 thus placed into the storage unit 68 are stored in conjunction with the sequence numbers included in their RTP headers 42.

The storage unit 68 serves as a buffer that outputs the TS packets 41 successively to an MPEG decoder 69. The MPEG decoder 69 decodes the successively supplied TS packets 41 in accordance with the MPEG standard. The output from the MPEG decoder 69 is fed to a display unit and speakers, not shown, as images and sounds offered to the user.

A time counting unit 71 has a counting means for counting time to monitor the TS packets 41 placed in the storage unit 68. If any TS packet 41 (data) is found missing from the storage unit 68, the time counting unit 71 instructs the retransmission control unit 70 to request retransmission of the missing TS packet 41.

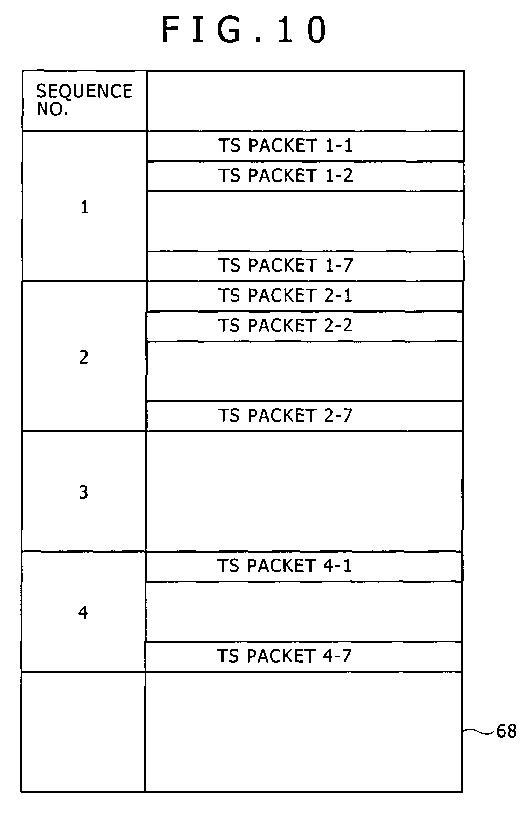

Below is a description of data stored in the storage unit 68. FIG. 10 is an explanatory view depicting a typical structure of data stored in the storage unit 68. In the storage unit 68, as mentioned above, the sequence number included in the RTP header 42 is stored in conjunction with the TS packets contained in that RTP packet corresponding to the sequence number.

The sequence numbers stored in the storage unit 68 may be either the sequence numbers themselves or suitable data uniquely representative of these sequence numbers.

Illustratively, as shown in FIG. 10, sequence number "1" is stored in conjunction with TS packets 1-1 through 1-7. That is because the embodiment of this invention assumes that each RTP packet (i.e., MAC packet received by the receiving apparatus 2) includes seven TS packets. If eight TS packets were assumed to be included in one RTP packet, then sequence number "1" would be stored in association with eight TS packets 1-1 through 1-8.

Referring again to FIG. 10, sequence number "2" is stored likewise in conjunction with seven TS packets 2-1 through 2-7. Sequence number "3", however, has no TS packets stored in connection therewith in the example of FIG. 10 although TS packets 3-1 through 3-7 would be thought of by association. Sequence number "4" is stored in conjunction with TS packets 4-1 through 4-7.

As described, TS packets that have been received and processed normally are stored in suitable areas in the storage unit 68 in conjunction with the corresponding sequence numbers. That is, the TS packets are stored in the order in which their sequence numbers occur in series. If for some reason any TS packets have not been received normally, nothing is stored in connection with the corresponding sequence number (e.g., the area associated with sequence number "3" has no packets stored in FIG. 10).

In the storage unit 68, as described, the sequence numbers related to areas having TS packets stored therein coexist with the sequence numbers corresponding to areas with no packets stored. In such a setup, it is possible to distinguish the sequence numbers having areas in which TS packets are stored, from the sequence numbers having areas without TS packets, through the use of a flag indicating the presence or absence of TS packets. That flag may also be used in processes to be discussed later.

As described, when some TS packets are not found in the storage unit 68, i.e., where some of the sequence numbers are missing, the number check unit 65 or the time counting unit 71 instructs the retransmission control unit 70 to output data for requesting retransmission of the missing TS packets (those not found in the storage).

Meanwhile, where the receiving apparatus 2 is structured shown in FIG. 9, the number check unit 65 checks to decide whether or not the sequence numbers of any supplied RTP headers 42 are missing. The time counting unit 71 references the storage unit 68 to decide whether or not there are any TS packets missing from the storage. The sequence reconstitution unit 66 references the TS packets stored in the storage unit 68 and reconstitutes their sequence in such a manner that the TS packets are stored in the order of their sequence numbers.

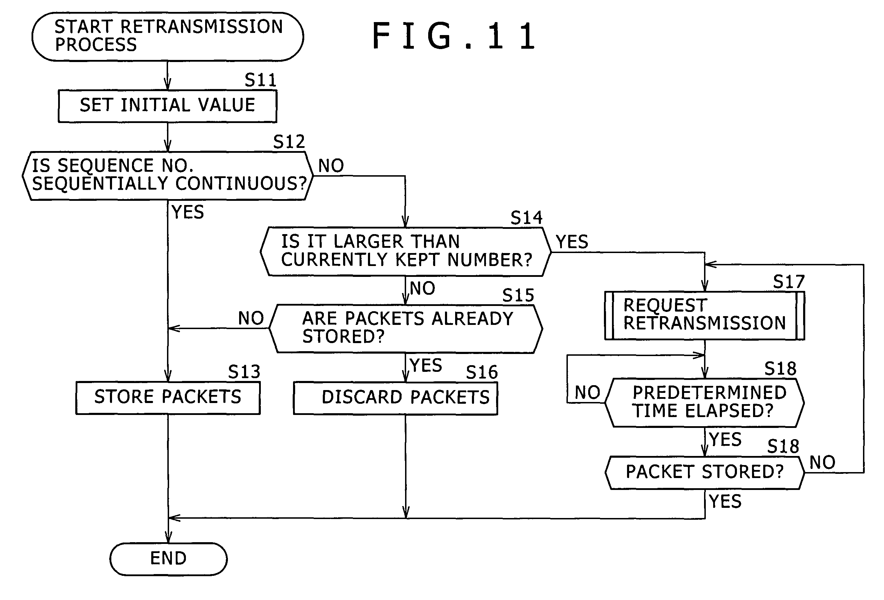

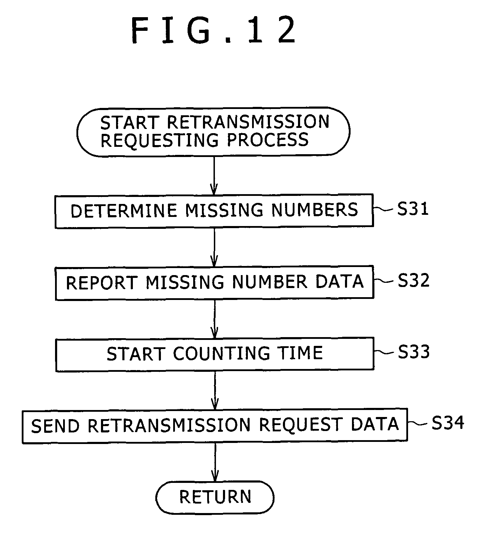

The processes carried out as instructed above are explained below with reference to the flowcharts of FIGS. 11 and 12. In step S11, an initial value is set by the number check unit 65. The initialization is executed illustratively when the receiving apparatus 2 is switched on, i.e., when new data (new RTP packet) is found to be received.

Receipt of the new data is detected when a new sequence number is retrieved from the RTP header 42. Whether or not a given sequence number is new is decided by comparing the sequence number stored in the number check unit 65 with the sequence number from the supplied RTP header.

In order to carry out the comparison above and other processes to be discussed later, the number check unit 65 keeps retaining the sequence number in the RTP header 42 from each RTP packet supplied. The sequence number thus stored is updated every time a new RTP packet is supplied. The update is performed normally (i.e., other than when the initial value is set) if the supplied sequence number is found greater than the stored number. That means the stored sequence number is currently the largest of sequence numbers.

However, the initial value is set regardless of such restrictions. The initialization involves comparing the number currently kept by the number check unit 65 with the sequence number found in the supplied RTP header 42. If the difference between the compared values is found large (i.e., larger than a predetermined value), that is interpreted as a sign that new data has started being received. In that case, the currently kept data is updated.

The initialization process may be performed during normal operation. For example, if for some reason the data from the transmitting apparatus 1 is not received for an extended period of time, the continuity of sequence numbers might be disrupted. If the difference between the number kept by the number check unit 65 and the sequence number in the supplied RTP header 42 becomes greater than the predetermined value, the same process as that of initialization will be carried out.

After the initial value is set as described above, normal operation is performed starting from step S12. The steps in the flowcharts of FIGS. 11 and 12 are carried out on every data increment received. However, once the initialization is completed, step S11 may be omitted, and step S12 and subsequent steps need only be carried out.

The initialization is followed by step S12 in which a decision is made whether or not the sequence number of the RTP header 42 in the received MAC packet is sequentially continuous. This check is also carried out by the number check unit 65. As mentioned above, the number check unit 65 retains currently the largest of sequence numbers from the RTP headers 42 of supplied RTP packets.

Sequence numbers are generated by the RTP header supplementing unit 22 of the transmitting apparatus 1 basically in the order in which RTP headers 42 were created (usually in ascending order). The generated sequence numbers are output in order of their generation from the communication unit 26. As a result, the RTP packets together with their basically continuous sequence numbers are transmitted to the number check unit 65 of the receiving apparatus 2. The word "basically" is used in the wording above in expectation of the possibility that RTP packets might not be transmitted or received in order of their sequence numbers for some reason. That eventuality is dealt with in steps to be described below.

Returning to the flowchart of FIG. 11, the number check unit 65 goes to step S12 and checks to decide whether or not the sequence number of the RTP header 42 in the received (i.e., supplied) RTP packet equals the currently retained value plus 1 (i.e., sequentially continuous number).

If in step S12 the sequence number of the RTP header 42 in the supplied RTP packet is found to be a sequentially continuous number, control is passed to step S13. The determination above is made when the data from the transmitting apparatus 1 is normally received and processed. In this case, the normally received and processed data (i.e., TS packets) is stored into the storage unit 68 in step S13.

If the number check unit 65 decides that the sequence number of the RTP header 42 in the supplied RTP packet is sequentially continuous, that RTP packet is forwarded to the sequence reconstitution unit 66. Given the RTP packet, the sequence reconstitution unit 66 references the RTP header 42 in the packet so as to retrieve the sequence number. The sequence reconstitution unit 66 then checks to decide whether or not the TS packets corresponding to the retrieved sequence number are stored in the storage unit 68.

The RTP packet, if found to have a sequentially continuous number, is considered a newly received RTP packet. In this case, the sequence reconstitution unit 66 decides that the TS packets in the supplied RTP packet are not stored in the storage unit 68. Following this determination, the RTP packet is transmitted to the RTP header extraction unit 67.

The RTP header extraction unit 67 extracts the RTP header 42 from the supplied RTP packet and stores the resulting TS packets into the storage unit 68. At this point, the TS packets are stored in conjunction with the sequence number included in the RTP header 42 as discussed above.

If in step S12 the number check unit 65 decides that the sequence number in the supplied RTP header 42 is not sequentially continuous to the currently kept number, then control is passed on to step S14. In step S14, the number check unit 65 checks to decide whether or not the sequence number of the RTP header 42 in the supplied RTP packet is larger than the retained number.

If in step S14 the number check unit 65 decides that the sequence number of the RTP header 42 in the supplied RTP packet is not greater than the currently kept number (i.e., smaller than the latter), then control is passed to step S15.

The data coming from the transmitting apparatus 2 is received and processed basically in the order of its sequence numbers as described above. Normally, the number check unit 65 in step S14 finds the sequence number of the RTP header 42 in each supplied RTP packet to be larger than the retained number. Still, the result of the check in step S14 could somehow result in the negative (e.g., as when a packet is transmitted or received out of sequence for some reason). In that case, control is passed on to step S15.

As a result of the execution of step S17, to be described later, the transmitting apparatus 1 may retransmit data with a sequence number smaller than that of the data that should be transmitted at that point in time. Following such a retransmission, the data with the smaller sequence number is received and processed normally by the receiving apparatus 2. In that case, the check in step S14 will result in the negative followed by another check in step S15.

If in step S14 the number check unit 65 decides that the sequence number in the supplied RTP header 42 is not larger than the currently kept number, the number check unit 65 sends the supplied RTP packet to the sequence reconstitution unit 66. In step S15, the sequence reconstitution unit 66 references the storage unit 68 to decide whether or not the TS packets in the supplied RTP packet are already stored in the storage unit 68.

As discussed above with reference to FIG. 10, the normally processed TS packets are stored in association with the corresponding sequence numbers in the storage unit 68. The sequence reconstitution unit 66 retrieves the sequence number from the supplied RTP header 42 and decides whether or not the TS packets associated with the retrieved sequence number are stored in the storage unit 68.

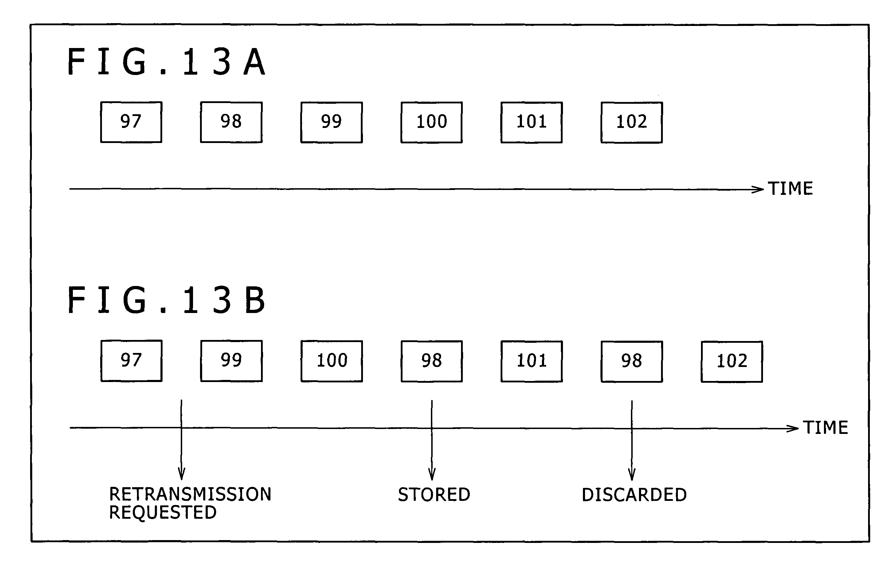

The reason why the steps above are performed is explained below with reference to FIGS. 13A and 13B. In FIG. 13A shows a state in which data is normally transmitted and received. In this state, packets (data) carrying continuous sequence numbers are transmitted normally by the transmitting apparatus 1 and received and processed normally by the receiving apparatus 2. In the state of FIG. 13A, packets with sequence numbers "97" through "102" are transmitted and received in correctly sequenced fashion.

As opposed to the normal state of data transmission and reception above, In FIG. 13B indicates a state in which packets with discontinuous sequence numbers are transmitted and received. Illustratively, the packet with the sequence number "97" is followed by a packet with sequence number "99". In such a case where some of the sequence numbers are skipped so that they become discontinuous but are still in ascending order, a retransmission request is made. The request for retransmission will be discussed later as the process of step S17.

A packet with sequence number "100" is received following the packet with the sequence number "99". The packet with the sequence number "100" is supposed to be followed by a packet with sequence number "101", but in fact a packet with sequence number "98" is received. The packet with the sequence number "98" received at this point by the receiving apparatus 2 is either a packet retransmitted by the transmitting apparatus 1 in response to the above-mentioned retransmission request, or a packet that arrived after the packet with the sequence number "100" because it somehow changed places with other packets when transmitted by the transmitting apparatus 1 or received by the receiving apparatus 2.

In any event, the packet with the sequence number "98" is received and processed here by the receiving apparatus 2 for the first time. It follows that the packet is not retained yet in the storage unit 68. That is, the sequence reconstitution unit 66 in step S15 decides that the packet in question is not found in the storage unit 68.

Referring again to the state in FIG. 13B, after the packet with the sequence number "98" is stored into the storage unit 68, a packet with sequence number "101" is received and stored, followed by the packet with the sequence number "98". As described above, the packet with the sequence number "98" is either the packet received in response to the retransmission request made earlier, or a packet that somehow changed places with other packets when transmitted or received.

In any case, the same packet as that with the sequence number "98" processed following the packet with the sequence number "101" was already received, processed and stored into the storage unit 68 following the packet with the sequence number "100". Therefore the sequence reconstitution unit 66 in step S15 decides that the packet in question is stored in the storage unit 68.

Step S15 is carried out in order to bypass the possibility that the packet with the same sequence number as that of a previously received packet might be received and processed again by the receiving apparatus 2 as described above. The packet found to be stored already in the storage unit 68 in step S15 (e.g., the packet with the sequence number "98") need not be placed again into the storage unit 68. In that case, control is passed on to step S16 and the packet in question is discarded.

If the packet is not found in the storage unit 68, then control is passed on to step S13 and the packet in question is stored into the storage unit 68. When any packet is to be stored into the storage unit 68, that packet is written to a particular area allocated beforehand for the packet in question (i.e., the area corresponding to the currently stored sequence number). In other words, a packet received later than those that should arrive later than the packet in question is arranged to change places with other packets so that the packet received out of sequence is written to the storage unit 68 as if it were received in a correctly sequenced manner. Such control over the storage is executed by the sequence reconstitution unit 66.

The request for retransmission will now be described. A retransmission requesting process is carried out in step S17 (FIG. 11). Control is passed to step S17 if in step S12 the number check unit 65 decides that the sequence number of the RTP header 42 in the supplied RTP packet is not continuous to the currently retained number and if in step S14 the sequence number is found larger than the retained number.

Referring again to the state in FIG. 13B, step S17 is reached when the RTP packet with the sequence number "97" is transmitted to the number check unit 65 followed by the RTP packet with the sequence number "99". This is a state in which the packet with the sequence number "98" should have been supplied but was not received (i.e., missing).

The retransmission requesting process is then carried out in step S17. This process is explained below with reference to the flowchart in FIG. 12. The retransmission requesting process is a process in which the transmitting apparatus 1 is requested to retransmit an RTP packet with a sequence number that should have been supplied but was not received, i.e., a packet that is deemed missing and needs to be acquired.

In step S31, the number check unit 65 decides the sequence number deemed missing. In step S32, the number check unit 65 reports data about the determined number to the retransmission control unit 70. In other words, the number check unit 65 decides the numbers missing between the currently kept number and the sequence number found in the supplied RTP packet as missing packet numbers (sequence numbers), and reports data about the missing numbers to the retransmission control unit 70.

For example, in the state of FIG. 13B, the sequence number "98" is reported to the retransmission control unit 70 as a missing number. If the currently retained number is "97" and if the sequence number in the supplied RTP packet is "120", then sequence numbers "98" through "119" are reported as missing numbers to the retransmission control unit 70. That is, one as well as a plurality of numbers may be reported to the retransmission control unit 70 as missing.

Given the data from the number check unit 65, the retransmission control unit 70 in step S33 causes the time counting unit 71 to start counting time. When triggering the counting of time, the retransmission control unit 65 supplies the time counting unit 71 with the data about the sequence numbers deemed missing. In step S34, the retransmission control unit 70 causes the communication unit 61 to transmit data constituting a retransmission request to the transmitting apparatus 1.

The retransmission request data transmitted from the communication unit 61 is explained below. The data is transmitted in the form of packets based on TCP adopted as the transport layer protocol. When the data shown in FIG. 3 (MAC packet) is transmitted from the transmitting apparatus 1, the transport layer protocol in effect is UDP as described above. By contrast, the data transmitted from the receiving apparatus 2 for requesting the retransmission is placed in packets pursuant to TCP.

The reason for the adoption of TCP is to make sure that the retransmission request has actually reached the transmitting apparatus 1. Although the retransmission request could be made in accordance with UDP, it is deemed unsatisfactory not to be able to decide whether or not the request itself has indeed been transmitted to the transmitting apparatus 1. This embodiment of the invention opts for the more reliable execution of retransmission requests under TCP instead of under UDP.

The retransmission request data transmitted pursuant to TCP includes at least what is reported to the retransmission control unit 70 as the data about the numbers deemed missing in steps S31 and S32 above.

With the retransmission request data transmitted to the transmitting apparatus 1, step S18 (FIG. 11) is reached. In step S18, the time counting unit 71 checks to decide whether or not a predetermined period of time has elapsed. The time counting unit 71 starts counting time when the retransmission request is transmitted to the transmitting apparatus 1 under the instructions of the retransmission control unit 70 as described above.

In step S18, a decision is made whether or not the counted time has reached a predetermined value. If a predetermined time period is found to have elapsed in step S18, step S19 is reached. In step S19, the time counting unit 71 references the data which represents the numbers deemed missing and which was received from the retransmission control unit 70, so as to decide whether or not the TS packets associated with the received numbers (i.e., sequence numbers) are found in the storage unit 68.

The check made in step S19 is explained below in more detail. The processes discussed above with reference to the flowcharts of FIGS. 11 and 12 are carried out on each data increment (i.e., MAC packet) received by the receiving apparatus 2. While a check is being made in step S18 to see if the predetermined time period has elapsed, the receiving apparatus 2 keeps receiving packets consecutively. The steps in the flowcharts of FIGS. 11 and 12 are performed continuously on each of the received packets.

The packets received and processed successively could include packets retransmitted by the transmitting apparatus 1 in response to the retransmission request issued upon execution of step S17. If the retransmission takes place normally and if the retransmitted data is received and processed normally, then the retransmitted TS packets are supposed to be placed into storage. In step S19, a decision is thus made to whether or not the TS packets retransmitted in response to the retransmission request are located in the storage unit 68.

If in step S19, the time counting unit 71 decides that the TS packets supposed to have been retransmitted are not found in the storage unit 68, then step S17 is reached again and another retransmission request is issued. At this time, the request is made only for the TS packets not found in the storage unit 68.

Illustratively, suppose that the packets deemed missing have sequence numbers "100" through "120" and that a retransmission request is made for these packets. Suppose also that following the retransmission request for the packets with the sequence numbers "100" through "120", the TS packets corresponding to the sequence numbers "100" through "110" are found in the storage unit 68 in step S19. In that case, another request is made for retransmission of the TS packets having the sequence numbers "111" through "120".

In this manner, the retransmission request is issued repeatedly so that the missing packets (i.e., data) will be acquired in more reliable fashion.

Although not shown in FIG. 11, there should be inserted before or after step S19 a step in which to terminate the execution of step S19. The retransmission request is made repeatedly until the TS packets requested to be retransmitted are found in step S19 to have been placed in the storage unit 68. In the meantime, the TS packets stored in the storage unit 68 are forwarded successively to the MPEG decoder 69.

Referring again to FIG. 10, the TS packets 1-1 through 1-7 associated with the sequence number "1" are first transmitted to the MPEG decoder 69. Then the TS packets 2-1 through 2-7 corresponding to the sequence number "2" are supplied to the MPEG decoder 69.

After that, TS packets related to the sequence number "3" are supposed to be fed to the MPEG decoder 69. At this point, however, if the TS packets related to the sequence number "3" are not found in the storage unit 68 and are thus not transmitted to the MPEG decoder 69. Instead, the TS packets 4-1 through 4-7 associated with the next sequence number "4" are forwarded to the MPEG decoder 69.

In other words, if the TS packet related to the sequence number "3" are not placed into the storage unit 68 before the TS packets associated with the sequence number "4" are supplied to the MPEG decoder 69, then there is no need subsequently to acquire the TS packets related to the sequence number "3" or to carry out any related process.

With such things taken into consideration, there is no need for the time counting unit 71 to make retransmission requests repeatedly until the packets deemed missing are acquired. Step S19 may then be preceded by another step in which to decide whether or not the retransmission request has been issued a predetermined number of times. If the retransmission request is found to have been made the predetermined number of times, then step S19 will be skipped and the processing of the flowcharts in FIGS. 11 and 12 will be brought to an end. That is, the retransmission requesting process is stopped.

Alternatively, step S19 may be followed by another step in which to decide whether or not the retransmission request has been issued the predetermined number of times. This alternative arrangement also serves to halt the retransmission requesting process, basically in the same manner as in the case where step S19 is preceded by the equivalent step.

The number of times the retransmission request is to be made may be determined in keeping with the capacity of the storage unit 68. For example, if the storage unit 68 has a capacity large enough to accommodate one second of data and if the predetermined time period for use in step S18 is set for 100 milliseconds on the time counting unit 71, then step S18 is repeated 10 times over a one-second period.

In that case, before or after step S19 (applicable if the result of the check in step S19 is negative), the step in which to decide whether or not to halt the retransmission request involves checking to see if a "10th retransmission request" is about to be made.

Even if the 10th retransmission request is made and if the relevant data is received in response to that request, the process that requires the data is already being carried out by the MPEG decoder 69 without using the data. That means it is unnecessary to issue the 10th retransmission request. In this case, the retransmission requesting process may be arranged to stop without issuance of the 10th retransmission request.

As described, it is possible to impose restrictions on the number of times the retransmission request can be made before the retransmission requesting process is stopped. Alternatively, it is also possible to set a suitable time period as the basis for deciding when to halt the retransmission request. For example, if the storage unit 68 has a capacity large enough to accommodate one second of data, then any retransmission request issued one second after the time counting unit 71 started counting time is practically useless.

Whether or not to halt the retransmission requesting process may then be determined by checking to see if a predetermined time period (1 second in this example) has elapsed since the counting of time started illustratively in conjunction with step S18. When the predetermined time period is found to have elapsed, the retransmission requesting process may be halted.

In the example above, it was shown that the time counting unit 71 starts counting time given the instruction from the retransmission control unit 70. If the TS packets requested to be retransmitted are not found in the storage unit 68 upon elapse of the predetermined time period, another retransmission request is made. Alternatively, the time counting unit 71 may be arranged to count time with or without the instruction coming from the retransmission control unit 70.

If the time counting unit 71 is to count time continuously, then the time counting unit 71 may reference the storage unit 68 at predetermined intervals (e.g., every 100 milliseconds) in order to extract the sequence numbers which are found in the storage but which have no TS packets stored in conjunction therewith. The time counting unit 71 may then supply the retransmission control unit 70 with data representative of the extracted sequence numbers and instruct the unit 70 to issue a retransmission request.

In the manner described, the receiving apparatus 2 identifies the missing packets (data) and requests the transmitting apparatus 1 to retransmit the packets deemed missing that need to be acquired. Issuing such retransmission requests makes it possible for the receiving apparatus 2 to acquire the packets that have not been received (processed) for some reason.

It is the receiving apparatus 2 that decides whether or not any packets are missing. This arrangement can circumvent redundant steps performed by both the transmitting apparatus 1 and the receiving apparatus 2 in getting the packets retransmitted which are deemed missing by the transmitting apparatus 1 (e.g., when it checks whether or not an acknowledge signal has been received). In other words, packet retransmission can then be performed more efficiently by the sender and receiver sides.

To let the receiving apparatus 2 carry out the processing above requires that the transmitting apparatus 1 be structured to retransmit data in response to retransmission requests. The requirement is met by the transmitting apparatus 1 being structured shown in FIG. 2, the structure including the storage unit 28 to accommodate the data to be retransmitted.

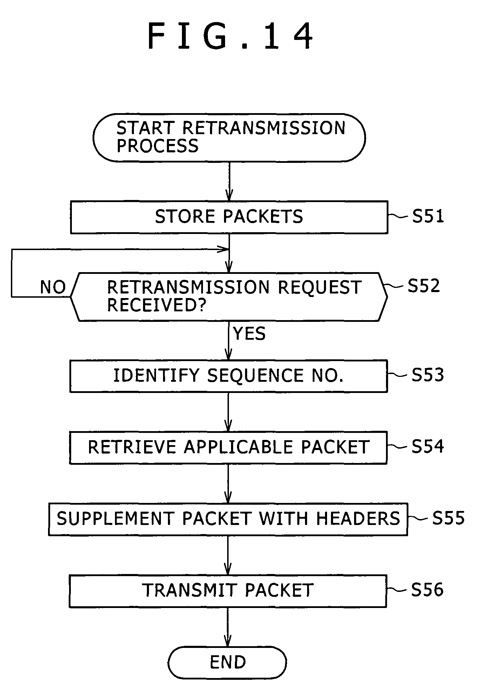

Referring to the flowchart of FIG. 14, what the transmitting apparatus 1 does in response to a retransmission request will now be described. In step S51, the transmitting apparatus 1 places into the storage unit 28 RTP packets coming from the RTP header supplementing unit 22. The storage unit 28 has a capacity equal to or larger than the capacity of the storage unit 68 for accommodating TS packets on the side of the receiving apparatus 2.

The storage unit 28 stores RTP packets as mentioned above. It is therefore possible to identify the stored RTP packets in relation to the sequence numbers of the RTP headers 42 included in these packets. The RTP packets placed in the storage unit 28 are deleted successively in ascending order of their sequence numbers to make room for new RTP packets to be stored. The timing for deleting packets and the amount of packetized data to be deleted may be determined in consideration of the capacity of the storage unit 28.

Each RTP packet coming from the RTP header supplementing unit 22 is further supplemented with headers by the UDP header supplementing unit 23, IP header supplementing unit 24, and MAC header supplementing unit 25.

Each RTP packet thus supplemented with the headers is transmitted as a MAC packet from the communication unit 26 to the receiving apparatus 2. Following the transmission, the storage unit 28 still retains the RTP packets included in the transmitted MAC packets.

In step S52, a decision is made whether or not a retransmission request has been received. This check is carried out by the retransmission control unit 27 referencing the data received through the communication unit 26. The data, as discussed above, has been transmitted from the receiving apparatus 2 under TCP.

If in step S52 the received data is found to constitute the retransmission request, then step S53 is reached. In step S53, the receive data is analyzed and the sequence number or numbers requested for retransmission are identified accordingly.

With the sequence number identified by the retransmission control unit 27, step S54 is reached and the RTP packet having the identified sequence number is retrieved from the storage unit 28. The RTP packet read from the storage unit 28 is transmitted to the UDP header supplementing unit 23. These operations are carried out under control of the retransmission control unit 27.

The RTP packet forwarded to the UDP header supplementing unit 23 is further supplemented with more headers by the downstream header supplementing units. The packet thus furnished with the headers is transmitted from the communication unit 26 to the receiving apparatus 2 (in steps S55 and 56).

As described, upon receipt of a retransmission request, the transmitting apparatus 1 retrieves from the storage unit 28 the RTP packet corresponding to the request and retransmits the retrieved packet to the receiving apparatus 2. With such processing carried out on the side of the transmitting apparatus 1, the receiving apparatus 2 can acquire each of the packets deemed missing.

According to this invention, as described, the communication scheme under UDP contributes to reducing communication-related processes so that communications involving real-time processing can be adequately dealt with. This makes it possible for the receiving apparatus 2 to take action to acquire missing packets, whereby the reliability of communication is enhanced.

In the above-described embodiment of this invention, the sequence numbers included in each RTP header 42 were shown utilized in carrying out the steps to acquire missing packets. When such measures are taken for missing packet acquisition, it is possible to address not only the packets getting lost during transmission but also the packets going missing due to unexpected troubles in the transmitting apparatus 1 or receiving apparatus 2.

Suppose that a failure in the transmitting apparatus 1 has prevented data carrying a given sequence number from getting transmitted to the receiving apparatus 2 or that a fault in the receiving apparatus 2 has kept data with a given sequence number from getting received.

In such a case, the receiving apparatus 2 embodying this invention issues a request for retransmission of the data carrying the sequence number not received. If RTP were not adopted, with communications carried out without using sequence numbers, then it would be impossible to identify any data not received (i.e., data requested to be retransmitted). Even if the receiving apparatus 2 issued a retransmission request, the transmitting apparatus 1 would have no idea which data to retransmit. Data retransmission would not take place in that case.

Retransmission requests could still be made during a retry process under a wireless communication protocol. That kind of protocol, however, fails to identify the data to be retransmitted. By contrast, RTP-based communication such as that conducted by this embodiment of the invention permits the execution of viable retransmission processing. With missing data retransmitted and acquired in a more dependable manner, the reliability of communication is boosted correspondingly.

As another alternative, the combined use of the "sequence number" field and "time stamp" field (in FIG. 5) makes it easier to determine whether or not the received data is new streaming data for the initialization of step S11 in FIG. 11. That is, the identification of a new data stream is made appreciably easier by referring to the two fields above.

For example, if the sequence number of given data is sequentially continuous but its time stamp turns out to be discontinuous, the data can be identified as new streaming data. In an environment where a plurality of data streams flow concurrently, the transmitting apparatus 1 may transmit the data streams with their time stamps suitably staggered over time. This makes it possible for the receiving apparatus 2 to select any one of the received multiple data streams and to issue the above-described retransmission request as deemed necessary.

Although the transmitting apparatus 1 as part of the above-described embodiment of this invention was shown receiving and processing analog-signal TV broadcasts, this is not limitative of the invention. Alternatively, the transmitting apparatus 1 may receive and process digital-signal TV broadcasts while still embodying the invention.

If the transmitting apparatus 1 is arranged to receive and process digital-signal TV broadcasts, the data involved is already packetized and furnished with a plurality of headers per packet. In this case, the invention may be practiced appropriately by omitting the above-described steps for encoding and supplementing data with headers and by rewriting some of the headers as needed.

The series of steps or processes (e.g., those associated with retransmission) described above may be executed either by suitable pieces of hardware with their specific functions, or by software. For the software-based processing to take place, the programs constituting the software may be either incorporated beforehand in dedicated hardware of a computer or installed upon use from an appropriate recording medium into a general-purpose personal computer or like equipment capable of executing diverse functions based on the installed programs.

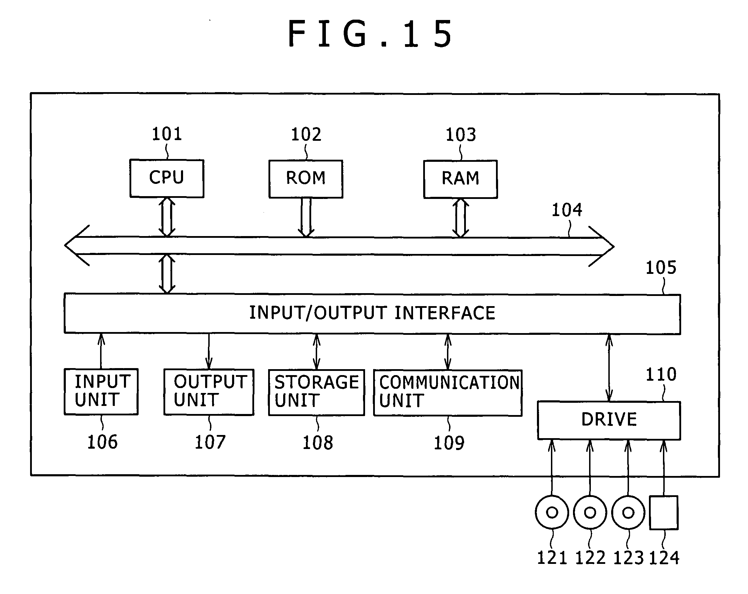

Before the recording medium intended for such uses is discussed, a typical personal computer for writing or reading data to or from the medium is outlined below. FIG. 15 shows a typical internal structure of a general-purpose personal computer. A CPU (Central Processing Unit) 101 of the personal computer performs diverse processes in keeping with programs stored in a ROM (Read Only Memory) 102. A RAM (Random Access Memory) 103 accommodates the data and programs needed by the CPU 101 in carrying out its processing. An input/output interface 105 is connected to an input unit 106 made up of a keyboard and a mouse. Signals input from the input unit 106 are output to the CPU 101 through the input/output interface 105. The input/output interface 105 is also connected to an output unit 107 constituted by a display device and speakers.

The input/output interface 105 is further connected to a storage unit 108 composed of a hard disk drive or the like as well as to a communication unit 109 that sends and receives data to and from other apparatuses over a network such as the Internet. A drive 110 is provided to write and read data to and from the recording medium such as a magnetic disk 121, an optical disk 122, a magneto-optical disk 123, or a semiconductor memory 124.

As shown in FIG. 15, the recording medium is offered to users apart from the computer not only as a package medium constituted by the magnetic disk 121 (including flexible disks), optical disk 122 (including CD-ROM (Compact Disc-read Only Memory) and DVD (Digital Versatile Disc)), magneto-optical disk 123 (including MD (Mini-Disc; registered trademark)), or semiconductor memory 124, each medium carrying the necessary programs; but also in the form of the ROM 102 or the hard disk drive including the storage unit 108, both accommodating the programs and incorporated beforehand in the computer.

In this description, the steps which are stored on the recording medium and which describe the programs to be executed represent not only the processes that are to be carried out in the depicted sequence (i.e., on a time series basis) but also processes that may be performed parallelly or individually.

In this description, the term "system" refers to an entire configuration made up of a plurality of component devices.

### Industrial Applicability

According to the present invention, data that should have been transmitted by the sender side or received by the receiver side but was not for some reason can still be acquired by the receiver side.

According to this invention, data that should have been transmitted or received but was not for some reason may be requested by the receiver side for retransmission from the sender side. In response to the request, the sender side retransmits the data in question for acquisition by the receiver side.

Also according to the invention, packets that have gone missing during communication under UDP may be acquired on the side of the receiver side.

## Claims

1. A transmitting and receiving system comprising a transmitting apparatus for transmitting data and a receiving apparatus for receiving said data transmitted by said transmitting apparatus;
wherein said transmitting apparatus includes:
acquiring means for acquiring said data;
supplementing means for supplementing said data acquired by said acquiring means with sequence information indicating the sequence of said data;
storing means for storing said data supplemented with said sequence information by said supplementing means;
transmitting means for transmitting to said receiving apparatus said data supplemented with said sequence information by said supplementing means; and
retransmitting means which, if said data transmitted by said transmitting means is requested to be retransmitted by said receiving apparatus, then retrieves the requested data from said storing means, before instructing said transmitting means to retransmit the retrieved data; and
wherein said receiving apparatus includes:
receiving means for receiving said data transmitted by said transmitting means;
deciding means for deciding whether or not any data is missing on the basis of said sequence information extracted from said data received by said receiving means;
identifying means for identifying data as missing data if that data is deemed to be missing by said deciding means; and
requesting means for requesting said transmitting apparatus to retransmit said data identified by said identifying means as said missing data.

2. A transmitting apparatus comprising:
acquiring means for acquiring data;
supplementing means for supplementing said data acquired by said acquiring means with sequence information indicating the sequence of said data;
storing means for storing said data supplemented with said sequence information by said supplementing means;
transmitting means for transmitting said data supplemented with said sequence information by said supplementing means; and
retransmitting means which, if said data transmitted by said transmitting means is requested to be retransmitted by another apparatus, then retrieves the requested data from said storing means, before instructing said transmitting means to retransmit the retrieved data.

3. The transmitting apparatus according to claim 2, wherein the request by said another apparatus to retransmit said data includes sequence information indicating the sequence of said data requested to be retransmitted; and
wherein said retransmitting means retrieves from said storing means the data supplemented with the sequence information coinciding with said sequence information indicating said sequence of said data.

4. The transmitting apparatus according to claim 2, wherein said supplementing means supplements said data with at least a header based on RTP as said sequence information; and
wherein said storing means stores said data supplemented with the RTP header.

5. The transmitting apparatus according to claim 4, wherein the request by said another apparatus to retransmit said data includes sequence number information as part of said RTP header; and
wherein said retransmitting means retrieves from said storing means the data supplemented with the header including the sequence number coinciding with said sequence number information included in said RTP header.

6. A transmitting method comprising the steps of:
controlling acquisition of data;
supplementing said data acquired in said acquisition controlling step with sequence information indicating the sequence of said data;
controlling storage of said data supplemented with said sequence information in said supplementing step;
controlling transmission of said data supplemented with said sequence information in said supplementing step; and
instructing said transmission controlling step to retransmit the retrieved data if said data transmitted in said transmission controlling step is requested to be retransmitted by another apparatus, then retrieving the requested data from said storage controlled in said storage controlling step,.

7. A receiving apparatus comprising:
receiving means for receiving data;
deciding means for deciding whether or not any data is missing on the basis of predetermined information extracted from said data received by said receiving means;
identifying means for identifying data as missing data if that data is deemed to be missing by said deciding means; and
requesting means for requesting another apparatus having transmitted said data to retransmit said data identified by said identifying means as said missing data.

8. The receiving apparatus according to claim 7, further comprising:
counting means for counting time starting from when said requesting means makes the request; and
instructing means for instructing said requesting means to make another request every time a predetermined time period has been counted by said counting means.

9. The receiving apparatus according to claim 7, wherein said predetermined information constitutes sequence information indicating the sequence of said data.

10. The receiving apparatus according to claim 9, wherein, if said deciding means stores first sequence information that is the latest of said sequence information included in the received data, if said first sequence information is not deemed continued to second sequence information included in newly received data, and if said first sequence information is found later in sequence than said second sequence information, then said deciding means decides that said data has been missing;
wherein said identifying means identifies as missing data the data including third sequence information coming interposingly between said first sequence information and said second sequence information; and
wherein said requesting means requests said another apparatus to retransmit the data including said third sequence information as said data deemed to have been missing.

11. The receiving apparatus according to claim 7, wherein said predetermined information constitutes serial numbers arranged in ascending order and assigned to data;
wherein, if said deciding means stores a first number that is the largest of said serial numbers included in the received data, if said first number is not deemed continued to a second number included in newly received data, and if said first number is found smaller than said second number, then said deciding means decides that said data has been missing;
wherein said identifying means identifies as missing data the data including a third number coming interposingly between said first number and said second number; and
wherein said requesting means requests said another apparatus to retransmit the data including said third number as said data deemed to have been missing by transmitting data including information about said third number to said another apparatus.

12. The receiving apparatus according to claim 7, wherein said deciding means extracts as said predetermined information a header based on RTP from said data in order to determine whether or not said data is missing on the basis of information about sequence numbers included in said header.

13. The receiving apparatus according to claim 12, wherein, if said deciding means stores a first sequence number that is the largest of the sequence numbers included in said header, if said first sequence number is not deemed continued to a second sequence number included in a newly supplied header, and if said first sequence number is found smaller than said second sequence number, then said deciding means decides that said data has been missing;
wherein said identifying means identifies as missing data the data having a header including a third number coming interposingly between said first sequence number and said second sequence number; and
wherein said requesting means requests said another apparatus to retransmit said data deemed to have been missing by transmitting data including information about said third sequence number to said another apparatus.

14. The receiving apparatus according to claim 13, wherein said requesting means transmits said data including said information about said third sequence number under TCP.

15. The receiving apparatus according to claim 13, wherein, if said first sequence number is not deemed continued to said second sequence number and if said first sequence number is found larger than said second sequence number, then said deciding means decides that the data including said second sequence number is the retransmitted data.

16. A receiving method comprising the steps of:
controlling reception of data;
deciding whether or not any data is missing on the basis of predetermined information extracted from said data received in said reception controlling step;
identifying data as missing data if that data is deemed to be missing in said deciding step; and
requesting another apparatus having transmitted said data to retransmit said data identified in said identifying step decided as said missing data.
